# EUROPEAN PATENT APPLICATION

(11) **EP 4 708 241 A1**
(43) Date of publication of application: **11.03.2026**
(21) Application number: 25196786.5
(22) Date of filing: 19.08.2025
(51) Int. Cl.: G08B 13/04, B60R 25/10, G08B 13/08, G08B 29/18

(54) **VEHICLE INTRUSION DETECTION USING SENSOR FUSION**

(30) Priority: 23.08.2024 US 202463686378 P
(71) Applicant: Cambridge Mobile Telematics Inc., Cambridge, MA 02142 (US)
(72) Inventor: Girod, Lewis David, Cambridge, 02142 (US); Padowski, Gregory David, Cambridge, 02142 (US); Balakrishnan, Hari, Cambridge, 02142 (US)
(74) Representative: Mewburn Ellis LLP

(57) **Abstract**

Described herein are systems, methods, and other techniques for performing intrusion detection at a vehicle. A set of inertial samples are captured using an inertial sensor. A set of pressure samples are captured using a pressure sensor. A first specific pattern is identified in the set of inertial samples and a second specific pattern is identified in the set of pressure samples. The first specific pattern is temporally aligned with the second specific pattern. In response to identifying the first specific pattern and the second specific pattern, a notification of an intrusion event is generated. The notification of the intrusion event is transmitted to a remote device.

## Description

### BACKGROUND OF THE INVENTION

Aftermarket vehicle security devices face significant challenges compared to Original Equipment Manufacturer (OEM) installed devices. OEM devices benefit from access to the vehicle Controller Area Network (CAN) bus, which allows them to utilize door sensors, microphones, and other facilities. In contrast, aftermarket devices must be self-contained and operate with stringent low power requirements. Traditional methods of vehicle glass break detection often rely on microphone inputs, which either demand higher power consumption or suffer from false positives when operating at lower power. Thus, there is a need for a more efficient, reliable, and low-power solution for detecting vehicle intrusion and breakage events.

### SUMMARY OF THE INVENTION

Examples of the present invention generally relate to vehicle intrusion detection, and more particularly, to a low-power vehicle security device with onboard sensors that is mountable to a windshield or other component of a vehicle. In some examples, the device fuses high-frequency data from an inertial sensor, such as a Micro-Electro-Mechanical Systems (MEMS) accelerometer, with lower frequency data from a pressure sensor, such as a MEMS pressure sensor. Both sensors are suitable for low-power operation and have lower sample frequency requirements compared to acoustic sensors, resulting in reduced power consumption.

In some examples, a machine learning algorithm is employed to identify correlated events such as vehicle roll, shocks transmitted through the vehicle's skin and frame, and sudden changes in cabin pressure. A pressure drop may correlate with a door opening, whereas a pressure rise may correlate with a broken window. This system can operate effectively even when vehicle windows are not fully closed. Additionally, the pressure sensor can enhance vehicle orientation estimation during driving conditions and assist in crash detection by identifying airbag deployment signals.

In some aspects of the present invention, a computer-implemented method for performing intrusion detection at a vehicle involves several steps. First, an intrusion detection device captures a set of inertial samples using its inertial sensor and a set of pressure samples using its pressure sensor. The processor of the device then identifies a specific pattern in the inertial samples and another specific pattern in the pressure samples. The timestamps associated with these patterns are compared to determine if they are aligned in time. When these patterns are identified, the device generates a notification of an intrusion event and transmits (either wirelessly or via a wired connection) this notification to a remote device, such as a server or a user device.

In some aspects of the present invention, the patterns in the inertial and pressure samples are identified using a machine learning model, which takes these samples as inputs. Specifically, the pattern in the inertial samples may include a spike, while the pattern in the pressure samples may involve either an increase above a first threshold or a decrease below a second threshold. The intrusion detection device is typically mounted on the windshield of the vehicle, though the intrusion detected system could also be positioned elsewhere in the cabin of the vehicle. The generated intrusion event notification can indicate whether a door has been opened or a window has been broken.

In some aspects of the present invention, the method can be implemented by a non-transitory computer-readable medium containing instructions that, when executed by one or more processors, perform the described method. In some aspects of the present invention, a system for this method includes one or more processors and a computer-readable medium with instructions that, when executed, enable the processors to carry out the method.

Numerous benefits are achieved by way of the various embodiments over conventional techniques. For example, various examples described herein can address the abovementioned challenges by providing methods and systems with: (1) low power consumption, as the fusion of pressure and accelerometer data results in lower power consumption compared to microphone-based solutions, making it ideal for battery-powered devices; (2) versatility, as the system remains effective even when windows are open or in conditions where pressure signals alone would be insufficient; (3) high accuracy, as the pressure sensor provides signals highly correlated with door openings or broken windows, enhancing detection accuracy; and (4) crash detection, as the pressure sensor unambiguously detects airbag deployment, providing additional functionality for real-time crash reporting.

### BRIEF DESCRIPTION OF THE DRAWINGS

Aspects and features of the various embodiments will be more apparent by describing examples with reference to the accompanying drawings, in which:
FIG. 1 is a block diagram illustrating an example of an intrusion detection device mounted to a windshield of a vehicle;
FIG. 2 is a block diagram illustrating an example of a machine learning model that may be used to perform intrusion detection;
FIG. 3 is a block diagram illustrating an example of an intrusion detection system comprising an intrusion detection device and a server;
FIG. 4 shows a block diagram of an example of an intrusion detection system comprising an intrusion detection device; and
FIG. 5 illustrates a method of performing intrusion detection at a vehicle.

### DETAILED DESCRIPTION OF THE INVENTION

Determining intrusion or glass break conditions is a difficult task for aftermarket equipment that lacks access to vehicle power. Microphones, although commonly used for glass break detection, require larger currents due to the need for wide-band amplifiers and the cost of sampling and processing the signal. Low-power microphones with internal loud signal detection provide crude information and cannot retrieve relevant data when the digital interface is powered down. Relying solely on an inertial sensor like an accelerometer presents challenges in distinguishing between intrusions and other events such as passing vehicles, strong winds, or precipitation impacts, which can cause false positives.

Embodiments of the present invention provide a low-power vehicle security device that utilizes a specific sensor arrangement of an inertial sensor and a pressure sensor to detect vehicle intrusion events. The inertial sensor gathers high-frequency data related to vehicle roll and shocks that are transmitted through the vehicle's structure. Concurrently, the pressure sensor collects lower frequency data about changes in the cabin's air pressure. The samples produced by each of these sensors are buffered and then collectively processed by an onboard processor, which may determine whether an intrusion event has occurred. The intrusion event may be communicated to a remote server and/or to a user device (e.g., a smart phone) to provide an alert that the intrusion event has occurred.

In some examples, the samples produced by the onboard sensors are processed by a machine learning model designed to detect correlated events that indicate potential vehicle intrusions. The model can focus on certain features such as the magnitude of pressure changes and specific frequency bands in the accelerometer data. These features might include low-frequency signals indicative of vehicle rocking (0-3 Hz) and higher-frequency signals from shocks or impacts (20-50 Hz). The algorithm can be trained to adjust its thresholds and weights based on different vehicle characteristics, ensuring optimal performance across various models. When the machine learning model identifies specific patterns in the data, such as a combination of vehicle roll, shock signals, and sudden changes in cabin pressure, it can classify these events as either a door opening or a window breaking. Specifically, a drop in cabin pressure is associated with a door opening, while a rise in pressure suggests a broken window. This dual-sensor approach allows the system to accurately detect intrusions even if the vehicle windows are not fully closed, provided there is a pathway for the sensor to access cabin air.

To minimize power consumption further, the sensors incorporate built-in buffers that store collected data. For example, the inertial sensor (e.g., the accelerometer) might have a buffer of 100 samples and the pressure sensor a buffer of 32 samples. The main processor can wake up periodically (e.g., once a second) to retrieve and analyze the buffered data, rather than processing data continuously. This approach contrasts with traditional systems that wake up more frequently (e.g., hundreds of times a second) to capture and analyze data, thereby consuming more power.

In addition to intrusion detection, the pressure sensor can enhance vehicle orientation estimation during driving by identifying changes in road pitch. It can also aid in crash detection by recognizing signals that indicate airbag deployment. This added functionality makes the system versatile for various security and safety applications in vehicles.

In the following description, various examples will be described. For purposes of explanation, specific configurations and details are set forth in order to provide a thorough understanding of the examples. However, it will also be apparent to one skilled in the art that the example may be practiced without the specific details. Furthermore, well-known features may be omitted or simplified in order not to obscure the embodiments being described.

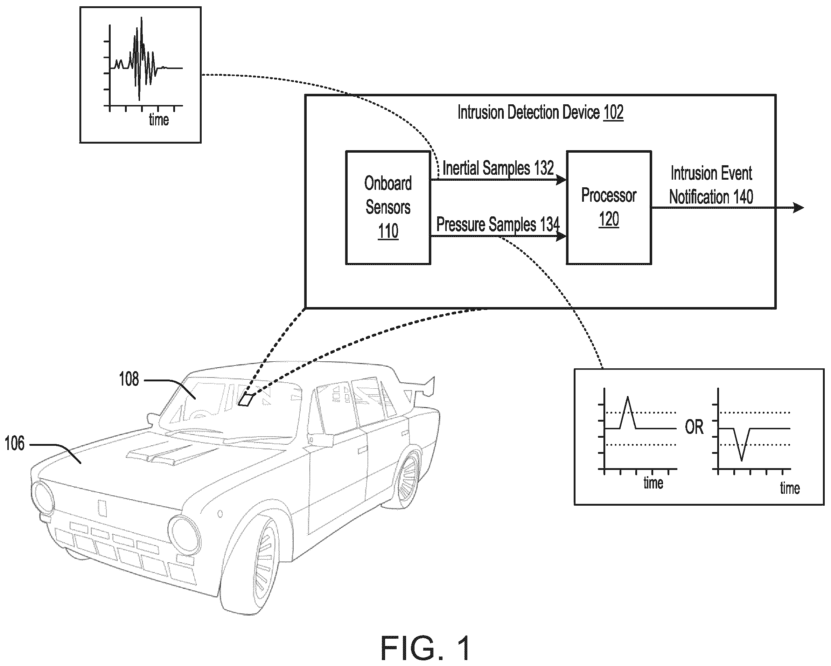

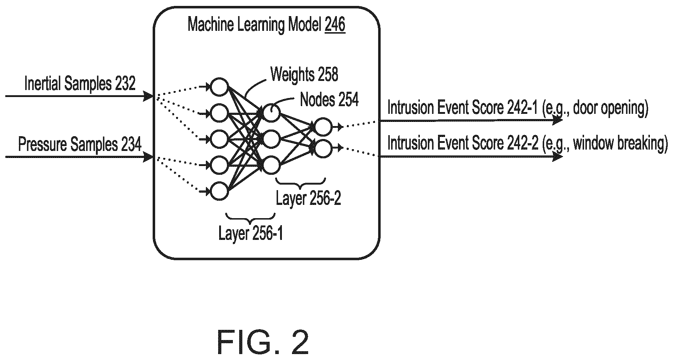

The figures herein follow a numbering convention in which the first digit or digits correspond to the figure number and the remaining digits identify an element or component in the figure. Similar elements or components between different figures may be identified by the use of similar digits. For example, 108 may reference element "08" in FIG. 1, and a similar element may be referenced as 208 in FIG. 2. As will be appreciated, elements shown in the various embodiments herein can be added, exchanged, and eliminated so as to provide a number of additional embodiments of the present disclosure. In addition, the proportion and the relative scale of the elements provided in the figures are intended to illustrate certain embodiments of the present disclosure and should not be taken in a limiting sense.

FIG. 1 is a block diagram illustrating an example of an intrusion detection device 102 mounted to a windshield 108 of a vehicle 106, according to some aspects of the present disclosure. Intrusion detection device 102 may be configured to detect intrusion events and report intrusion events to a remote entity. In some examples, intrusion detection device 102 can be positioned elsewhere in the passenger compartment of vehicle 106, such as on the dashboard, on the driver-side or passenger-side window, on the rearview mirror, under the seats, or integrated with a dashcam, among other possibilities. Intrusion detection device 102 can be mounted to vehicle 106 using any suitable mechanism, such as an adhesive or a hook- and-loop fastening system. The coupling may be removable to allow the user to manually attach and detach intrusion detection device 102 with relative ease.

Intrusion detection device 102 may include a plurality of processing, sensor, and communication resource components. Intrusion detection device 102 may include a set of onboard sensors 110 including an inertial sensor configured to generate a set of inertial samples 132 and a pressure sensor configured to generate a set of pressure samples 134. In some examples, inertial samples 132 may include measurements of motion and orientation over time, such as linear accelerations along one or more axes (X, Y, Z) captured by one or more accelerometers, or measurements of the rate of rotation around one or more axes captured by one or more gyroscopes. In some examples, pressure samples 134 may include measurements of pressure of the environment in which intrusion detection device 102 is located.

Processor 120 may perform one or more software routines to evaluate the inertial samples 132 and pressure samples 134. In some examples, both sensors' data streams are synchronized using timestamps to ensure that the data points from each sensor correspond to the same time intervals. The data from both sensors may be aligned to a common timeline, enabling direct comparison and correlation of events. In some examples, noise reduction techniques such as low-pass, high-pass, or band-pass filters are applied to both data streams to remove irrelevant or spurious signals. Optionally, inertial samples 132 may be analyzed to extract key features (referred to as inertial features) such as magnitude and direction of acceleration, angular velocity, and specific patterns like shocks, vibrations, or oscillations are extracted from the inertial data. Optionally, pressure samples 134 may also be analyzed to extract key features (referred to as pressure features) such as sudden spikes or drops in pressure, rate of pressure change, and baseline pressure levels are extracted from the pressure data.

In some examples, processor 120 may execute a machine learning model that receives inertial features and pressure features as inputs, or optionally inertial samples 132 and pressure samples 134 may be directly provided to the machine learning model as inputs. The machine learning model may be trained to identify the temporal alignment of specific inertial patterns and specific pressure patterns. For instance, a sudden drop in pressure combined with specific acceleration patterns (e.g., vehicle roll or shocks) may indicate a door opening, and a sudden increase in pressure combined with the specific acceleration patterns may indicate a window breaking. As shown in the illustrated example, an increase in magnitude of inertial samples 132 may correspond to a specific acceleration pattern while either a sudden increase or decrease in pressure samples 134 may correspond to a specific pressure pattern.

Processor 120 may generate and output an intrusion event notification 140 that indicates that an intrusion was detected by intrusion detection device 102 and optionally further indicates the type of intrusion event. For example, processor 120 may generate intrusion event notification 140 indicating a door opening in response to identifying a negative pressure spike along with a corresponding inertial signal and may generate intrusion event notification 140 indicating a window breaking in response to identifying a positive pressure spike along with a sudden, sharp inertial signal. Intrusion event notification 140 may be transmitted (either wirelessly or via a wired connection) to a remote device such as a server or a user device.

FIG. 2 is a block diagram illustrating an example of a machine learning model 246 that may be used to perform intrusion detection, according to some aspects of the present disclosure. Machine learning model 246 may generate one or more intrusion event scores 242 (e.g., having values between 0 and 1) based on a set of inertial samples 232 and a set of pressure samples 234. Machine learning model 246 may be a transformer, a neural network (e.g., FNN, CNN, RNN, LSTM, etc.), a decision tree, a random forest, an SVM, or an ensemble model, among other possibilities. Machine learning model 246 may include a set of weights 258 and other parameters that may be adjusted during training to minimize the error in the model's predictions. In some examples, weights 258 represent the strength of the connections between nodes 254 in the model and determine how input data is transformed as it passes through different layers 256 in the model. Layers 256 consist of groups of nodes 254 that operate at the same level in machine learning model 246.

In some examples, the machine learning model 246 may undergo a training process using labeled training data. The labeled training data may include inertial samples 232 that are labeled as being indicative, or not indicative, of intrusions. Additionally or alternatively, the labeled training data may include pressure samples 234 that are labeled as being indicative, or not indicative, of intrusions. Using this labeled training data, the machine learning model 246 can learn the types of patterns of inertial samples and/or pressure samples that are indicative of intrusions. During training or inference, inertial samples 232 and pressure samples 234 are provided as input to machine learning model 246. As shown in the illustrated example, inertial samples 232 and pressure samples 234 may be fed directly as inputs to different nodes 254 or, optionally, different inertial features and pressure features may be extracted and fed to different nodes 254. In some examples, the input samples are processed through a neural network layer by layer. Each node of each layer performs a weighted sum of its inputs based on weights 208, adds a bias, and passes the result through an activation function. This process continues until the final output layer produces a single output value or multiple (e.g., 2) output values representing possible intrusion events. For example, a first output value may correspond to a first intrusion event score 242-1 corresponding to a first intrusion event (e.g., a door opening) and a second output value may correspond to a second intrusion event score 242-2 corresponding to a second intrusion event (e.g., a window breaking). If either score exceeds a threshold (e.g., 0.5), then it may be determined that the corresponding intrusion event has been detected. Otherwise, e.g., if both intrusion event score 242 are less than the threshold, it may be determined that neither intrusion event has been detected.

It is to be understood that while the illustrated example shows only two layers 256, machine learning model 246 may include any number of layers 256, nodes 254, and weights 258. In general, each layer is associated with a set of weighted sum operations performed by a computer system, a set of bias additions performed by the computer system, and/or a set of activation function computations by the computer system. In some examples, machine learning model 246 may comprise a guard model, which typically includes a linear model or decision tree designed to have high intrusion event recall.

The computer system used to execute machine learning model 246 (during training or inference) may include hardware elements and software elements to handle the computational demands. The computer system may include a CPU having one or more cores (e.g., 8 or 16 cores) for handling parallel processing tasks. The computer system may include one or more GPUs or domain-specific processors such as NNPs, AI accelerators, or TPUs. The computer system may include memory and storage elements including volatile memory such as RAM and non-volatile memory such as SSD memory to store the weights, the input data, the output data, as well as any intermediate data.

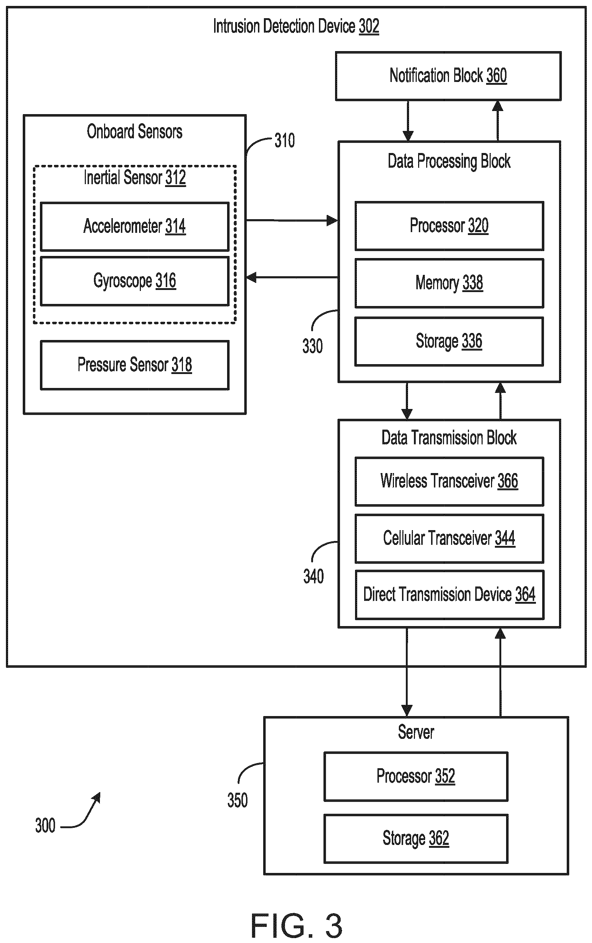

FIG. 3 is a block diagram illustrating an example of an intrusion detection system 300 comprising an intrusion detection device 302 and a server 350, according to some aspects of the present disclosure. Intrusion detection device 302 includes a plurality of processing, sensor, and communication resource components. Intrusion detection device 302 can be connected (e.g. physically attached) to an unoccupied vehicle to monitor a status of the vehicle and to detect intrusion events. Intrusion detection device 302 may include one or more onboard sensors 310, a data processing block 330, a data transmission block 340, and a notification block 360. Onboard sensors 310 includes a variety of sensors that can be included within or connected to intrusion detection device 302. Examples of such sensor devices include, but are not limited to, a pressure sensor 318 and an inertial sensor 312, which may include one or both of an accelerometer 314 or a gyroscope 316. The data processing block 330 may include storage 336 and memory 338, which may store data from the onboard sensors 310 to be processed by processor 320. Such processing may include, but is not limited to, analyzing, characterizing, manipulating, smoothing, subsampling, filtering, reformatting, etc., the data. In some embodiments, intrusion detection device 302 can be a mobile device. Examples of mobile devices include, but are not limited to, smartphones, tablets, laptops, and the like.

Data transmission block 340 may process communications (e.g., transmitted and received communications), such as the processed sensor data transmitted to an external computing device (e.g., server 350). Data transmission block 340 may include a wireless transceiver 366, cellular transceiver 344, or direct transmission device 364 (e.g., cable) for transmitting and receiving communications. The external computing device may also store and/or process the data obtained from onboard sensors 310. Server 350 may include its own processor 352 and storage 362.

Notification block 360 may report the results of an analysis of the sensor data, where the analysis may be conducted by the data processing block 330, to a user of intrusion detection device 302 via a display (not shown). In some examples, the analysis may be conducted by processor 320 of intrusion detection device 302. In other examples, the analysis may be conducted by the processor 352 of the server 350 and the results can be communicated to intrusion detection device 302.

One or more sensors of intrusion detection device 302 (e.g., the sensors of onboard sensors 310) may be operated to collect measurements that may be indicative of an event occurring in relation to the vehicle while the vehicle is unoccupied. These events may be referred to as intrusion events. Because the sensors used to collect data may be components of intrusion detection device 302, which may be powered by the vehicle's battery and/or an on-board battery, they may draw power from said batteries. To elongate battery life, some examples described herein can apply a specialized technique designed to reduce energy consumption while detecting vehicle events.

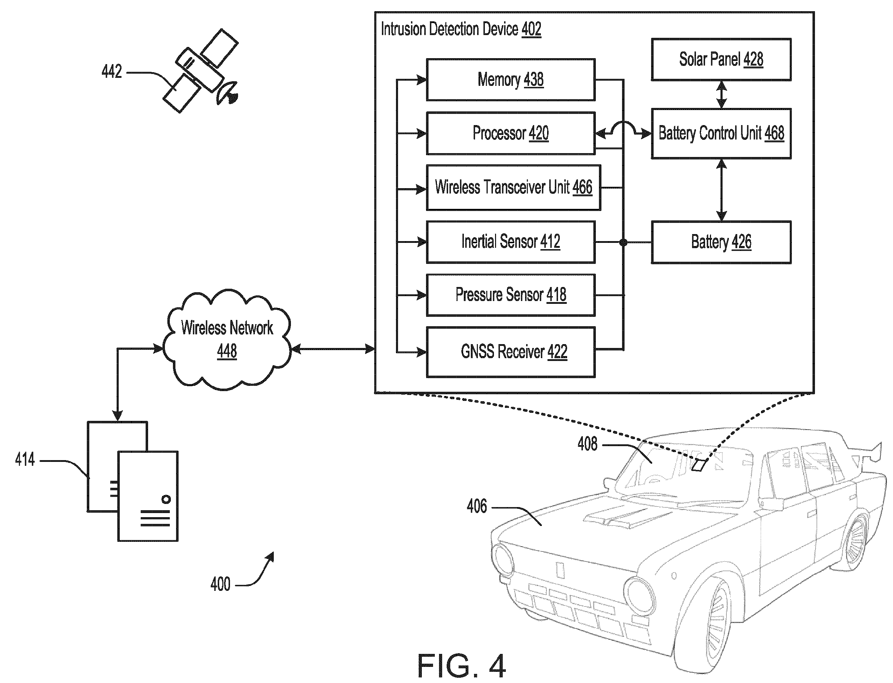

FIG. 4 shows a block diagram of an example of an intrusion detection system 400 comprising an intrusion detection device 402, according to some aspects of the present disclosure. As described in reference to FIG. 1, intrusion detection device 402 can be positioned in the passenger compartment of a vehicle 406 such as the interior face of a windshield 408 of vehicle 406. In some examples, the intrusion detection device 402 may operate solely by using power from an internal battery 426. In those situations, intrusion detection device 402 may not be connected to the vehicle's battery or any other battery during its normal course of use. The internal components of intrusion detection device 402 can be configured to receive power from battery 426. For example, some or all of the internal components can be coupled to the battery 426 to receive power therefrom. Battery 426 can be any suitable type of rechargeable battery, such as a lithium ion battery. In other examples, intrusion detection device 402 can be connected to the vehicle's battery. For instance, intrusion detection device 402 can have a power cable that is plugged into a power port of the vehicle. In those situations, intrusion detection device 402 may operate based on battery power from the vehicle's battery, from its internal battery 426, or both. Having both battery sources available may increase the reliability of intrusion detection device 402.

To help charge battery 426, intrusion detection device 402 can include a solar panel 428. For example, solar panel 428 may form part of the outer housing of intrusion detection device 402 or may be coupled to the outer housing of intrusion detection device 402. Solar panel 428 can be positioned on intrusion detection device 402 to receive light (e.g., sunlight or ambient light, such as from lights of a parking structure) for use in charging battery 426. For example, solar panel 428 can be positioned on intrusion detection device 402 such that solar panel 428 is sandwiched between windshield 408 and outer housing 432 when intrusion detection device 402 is coupled to windshield 408, thereby allowing solar panel 428 to receive light through windshield 408. A battery control unit 468 can be coupled to battery 426 to monitor various battery properties (e.g., voltage, current, temperature, and state of charge) and control the flow of power to and from battery 426. In some examples, battery control unit 468 can be coupled between solar panel 428 and battery 426 to monitor and control power flow from solar panel 428 to battery 426.

Intrusion detection device 402 can also include one or more processors, such as processor 420, coupled to one or more memories, such as memory 438. Processor 420 is hardware that can include one processing device or multiple processing devices. Examples of processor 420 can include a Field-Programmable Gate Array (FPGA), an application-specific integrated circuit (ASIC), or a microprocessor. Processor 420 is configured to execute processor-executable instructions stored in memory 438 to perform one or more processes described herein. The instructions may include processor-specific instructions generated by a compiler or an interpreter from code written in any suitable computer-programming language, such as C, C++, C#, Java, or Python.

Memory 438 is hardware that can include one memory device or multiple memory devices. Memory 438 can be volatile or non-volatile (it can retain stored information when powered off). Examples of memory 438 include electrically erasable and programmable read-only memory (EEPROM), flash memory, or cache memory. At least some of memory 438 includes a non-transitory computer-readable medium from which processor 420 can read instructions. A computer-readable medium can include electronic, optical, magnetic, or other storage devices capable of providing processor 420 with the instructions or other program code. Examples of a computer-readable mediums include magnetic disks, memory chips, ROM, random-access memory (RAM), an ASIC, a configured processor, and optical storage.

Intrusion detection device 402 can implement a number of techniques to help reduce power consumption and thus elongate its battery life. One such technique can involve switching processor 420 between different power modes in response to detecting various events. For example, intrusion detection device 402 can maintain processor 420 in a very low power state called "hibernation mode" by default. In hibernation mode, processor 420 is not running. An inertial sensor 412 (e.g., an accelerometer) can be configured to sample at a relatively low rate, and can signal processor 420 in response to detecting any acceleration over a predefined acceleration threshold (e.g., 0.3 g). For example, in response to detecting an acceleration that meets or exceeds the predefined acceleration threshold, the accelerometer can transmit an interrupt signal to processor 420. The interrupt signal can cause processor 420 to enter a "sleep mode." The sleep mode can consume more power than the hibernation mode. While in the sleep mode, processor 420 can begin to receive and analyze inertial samples from inertial sensor 412 and pressure samples from a pressure sensor 418. For example, processor 420 can query the accelerometer for 410 Hz or 400 Hz time-series data and determine whether the acceleration samples exceed the predefined acceleration threshold. If processor 420 detects that the acceleration samples exceed the threshold, processor 420 can enter an active mode. The active mode can be the highest power mode in which processor 420 executes all of the tasks for detecting an intrusion event. In this high power mode, the processor 420 can activate some or all other high-energy-consumption sensors and data collection peripherals.

In some examples, processor 420 may employ additional techniques to reduce its power consumption, even in the active mode. For instance, processor 420 can enter a paused state as frequently as possible to aggressively save power. When processor 420 is in the paused state, processor 420 is no longer executing instructions and its high-speed clocks are halted, so it can only be awakened by interrupts generated from sources external to processor 420. Examples of such external sources can include peripherals, such as inertial sensor 412, pressure sensor 418, or wireless transceiver unit 466, which can generate interrupts to wake up the processor 420. Other examples of the external sources can include low-speed clocks. Unlike high-speed clocks that consume a great detail of power and may run in the Megahertz (MHz) range, low speed clocks use little power and may run in the Kilohertz (KHz) range. In some examples, intrusion detection device 402 can include at least two low-speed clocks. The first low-speed clock can be used for periodic wakeup, allowing processor 420 to do housekeeping at a low duty cycle. The periodic timer can wake the device at a periodic interval, such as every second, during which processor 420 can do housekeeping tasks for a few milliseconds. The second low-speed clock can be used for tasks scheduled for some point in the future. Any software on processor 420 can schedule a task to run at a future point in time. Processor's 420 task queue can find the earliest such deadline, ensure that the deadlines do not undermine power savings by coming too close together, and then schedule a single wakeup signal (e.g., in a one-shot timer) that serves as another interrupt source. By keeping processor 420 paused for as much time as possible, and only waking processor 420 in response to interrupt signals from peripherals or low-speed clocks, the power consumption of processor 420 can be minimized.

In some examples, intrusion detection device 402 may include a global navigation satellite system (GNSS) receiver 422 that can be used to determine a location of intrusion detection device 402 based on signals received from one or more satellites 442. GNSS receiver 422 may generate location data or movement data by receiving signals from the U.S. Global Positioning System (GPS), the Russian GLONASS system, the European Galileo system, the Chinese BeiDou system, the Japanese QZSS system, etc. Upon determining one or more locations of intrusion detection device 402, processor 420 may adjust the processor's power mode and/or the predefined acceleration threshold based on where vehicle 406 is located and/or whether it is moving. For example, while it is determined that vehicle 406 is moving, processor 420 may switch to the hibernation mode to conserve power as the vehicle will be occupied and it may be desirable that intrusion detection is not active. Once it is determined that vehicle 406 is not moving, processor 420 may switch to the sleep mode to begin receiving and analyzing inertial samples. In some instances, the predefined acceleration threshold can be adjusted based on the location of vehicle 406. For example, the predefined acceleration threshold may be increased if vehicle 406 is at a location with significant ambient noise, such as a busy road, and decreased if vehicle 406 is at a location with little ambient noise, such as in a garage of a house. As another example, the predefined acceleration threshold may be decreased if the vehicle 406 is in a location that is considered to be less safe (such as a public parking lot or road, because theft is more likely in that location so a higher degree of sensitivity may be warranted), and may be increased if the vehicle 406 is in a location that is considered more safe (such as a home garage, because theft is less likely in that location so a lower degree of sensitivity may be warranted).

During operation, intrusion detection device 402 can detect intrusion events and generate notifications of the detected intrusion events. Intrusion detection device 402 can be configured to attempt to transmit the intrusion event notifications to a server system 414 via a wireless network 448 in response to generating the intrusion event notifications. If processor 420 detects an intrusion event, processor 420 can next determine whether battery 426 has at least a predefined level of charge, which can be greater than the amount of power needed by wireless transceiver unit 466 to attempt the transmission. If not, the transmission may be delayed until battery 426 has at least the predefined level of charge. If so, processor 420 can next evaluate the link conditions, such as the wireless signal strength. If the link conditions are favorable, for example because the wireless signal strength meets or exceeds a predefined strength threshold, processor 420 can attempt to transmit the intrusion event notification to server system 414. If the link conditions are unfavorable, for example because the wireless signal strength is below the predefined strength threshold, or if the wireless transmission fails, processor 420 can try to transmit the intrusion event notification again later.

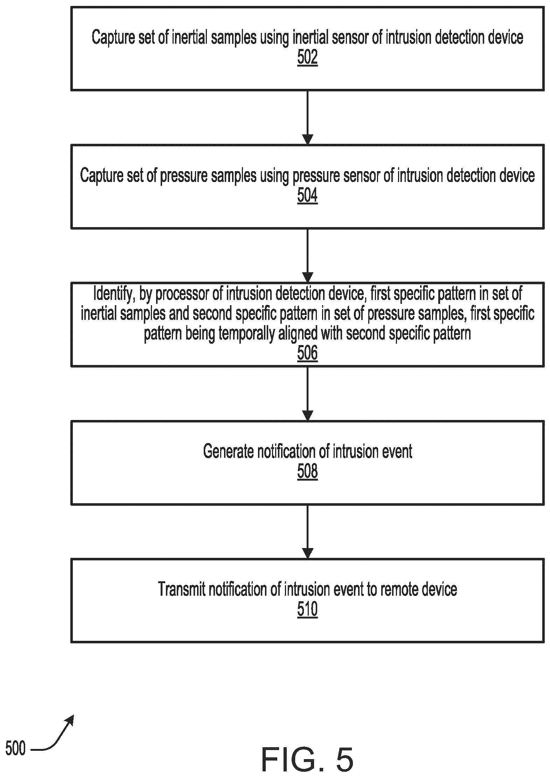

FIG. 5 illustrates a method 500 of performing intrusion detection at a vehicle (e.g., vehicles 106, 406), according to some aspects of the present disclosure. Steps of method 500 may be performed in any order and/or in parallel, and one or more steps of method 500 may be optionally performed. One or more steps of method 500 may be performed by one or more processors. Method 500 may be implemented as a computer-readable medium or computer program product comprising instructions which, when the program is executed by one or more processors, cause the one or more processors to carry out the steps of method 500.

Step 502 includes capturing a set of inertial samples (e.g., sets of inertial samples 132, 232) using an inertial sensor (e.g., inertial sensors 312, 412) of an intrusion detection device (e.g., intrusion detection devices 102, 302, 402). In some examples, this involves configuring the inertial sensor, such as a MEMS accelerometer or gyroscope, within the intrusion detection device to sample motion-related parameters, such as linear acceleration and angular velocity, at a predetermined sampling frequency. The sensor may be set to operate in a low-power mode, periodically waking to collect data or responding to a hardware interrupt upon detecting motion above a certain threshold. The sampled inertial data can be buffered locally in memory within the sensor or device, and may include timestamped multi-axis measurements (e.g., acceleration along X, Y, and Z axes) to capture subtle vibrations, impacts, or changes in vehicle orientation. The device may further apply pre-processing steps, such as filtering (e.g., low-pass, high-pass, or band-pass), to reduce noise and isolate relevant signal features before further analysis.

Step 504 includes capturing a set of pressure samples (e.g., sets of pressure samples 134, 234) using a pressure sensor (e.g., pressure sensors 318, 418) of the intrusion detection device. In some examples, the device utilizes an onboard pressure sensor, typically a MEMS barometric sensor, configured to monitor changes in ambient air pressure within the vehicle cabin. The pressure sensor may sample at a lower frequency compared to the inertial sensor, given the relatively slow dynamics of pressure changes associated with intrusion events. Data from the pressure sensor is periodically acquired and stored in a buffer, with each sample typically timestamped for later correlation with inertial data. The pressure sensor may also employ internal averaging or smoothing to enhance signal quality. In some embodiments, the system can dynamically adjust the sampling rate or sensitivity of the pressure sensor in response to contextual factors, such as the vehicle's environment or detected motion, to optimize power consumption and detection accuracy.

Step 506 includes identifying, by a processor (e.g., processors 120, 320, 420) of the intrusion detection device, a first specific pattern in the set of inertial samples and a second specific pattern in the set of pressure samples, the first specific pattern being temporally aligned with the second specific pattern. In some examples, the processor retrieves the buffered inertial and pressure samples and performs signal analysis to extract temporal features indicative of potential intrusion events. This may involve running a machine learning model or heuristic algorithm trained to recognize characteristic patterns, such as a sudden spike or oscillation in inertial data coinciding with a rapid increase or decrease in cabin pressure. The processor aligns the two sets of sensor data using their associated timestamps to ensure that any patterns detected are concurrent or occur within a predefined time window. Pattern recognition can include threshold-based detection, frequency domain analysis, or advanced classification algorithms that consider the magnitude, duration, and context of the observed signals. The alignment and correlation of these patterns may be important to reducing false positives and confirming that both motion and pressure changes are part of a single intrusion event.

Step 508 includes, in response to identifying the first specific pattern and the second specific pattern, generating a notification of an intrusion event (e.g., intrusion event notification 140). In some examples, upon successfully detecting temporally correlated patterns in both the inertial and pressure sensor data, the processor generates a notification indicating that an intrusion event has likely occurred. This notification may include metadata such as the type of intrusion (e.g., door opening, window breaking), the timestamp of the event, the magnitude and direction of detected signals, and possibly the device's location if equipped with a positioning module. The notification can be formatted in accordance with a predefined protocol (e.g., JSON, XML, or proprietary format) and may be digitally signed or encrypted to ensure authenticity and security. Additional diagnostic or contextual information, such as sensor status, battery level, or environmental conditions, may also be appended to the notification to aid in further analysis or response.

Step 510 includes transmitting (either wirelessly or via a wired connection) the notification of the intrusion event to a remote device. In some examples, following generation, the intrusion event notification is transmitted from the intrusion detection device to a remote endpoint, which may be a server, user's mobile device, monitoring service, or cloud platform. The device selects an appropriate communication interface, such as Wi-Fi, cellular, Bluetooth, or a direct wired connection, based on availability and configuration. Prior to transmission, the device may check network signal strength, battery level, and other operational parameters to ensure reliable delivery. If conditions are unfavorable, the notification may be queued for retransmission or sent via an alternative channel. The system may implement data encryption and authentication mechanisms to protect against unauthorized access or tampering during transmission. Upon successful delivery, the remote device can process the notification, alert the user, initiate recording, or take automated security actions as configured.

Specific details are given in the following description to provide a thorough understanding of the embodiments. However, it will be understood by one of ordinary skill in the art that the embodiments may be practiced without these specific details. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

Also, it is noted that individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed but could have additional steps not included in a figure. A process may correspond to a method, a function, a procedure, a subroutine, a subprogram, etc. When a process corresponds to a function, its termination can correspond to a return of the function to the calling function or the main function.

Implementation of the techniques, blocks, steps, and means described above may be done in various ways. For example, these techniques, blocks, steps, and means may be implemented in hardware, software, or a combination thereof. For a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), mask programmable gate array (MPGA), processors, controllers, microcontrollers, microprocessors, other electronic units designed to perform the functions described above, and/or combinations thereof.

Also, it is noted that the embodiments and/or examples may be described as a process which is depicted as a flowchart, a flow diagram, a swim diagram, a data flow diagram, a structure diagram, or a block diagram. Although a depiction may describe the operations as a sequential process, many of the operations can be performed in parallel or concurrently. In addition, one or more of the operations may be performed out-of-order from the order depicted. A process may terminate when its operations are completed or return to a previous step or block. A process could have additional steps or blocks not included in the figure. A process may correspond to a method, a function, a procedure, a subroutine, a subprogram, etc. When a process corresponds to a function, its termination corresponds to a return of the function to a calling function or a main function.

Furthermore, the devices and/or systems described herein may be implemented by hardware, software, scripting languages, firmware, middleware, microcode, hardware description languages, and/or any combination thereof. When implemented in software, firmware, middleware, scripting language, and/or microcode, the program code, or code segments to perform the necessary tasks may be stored in a non-transitory computer-readable medium such as a storage medium. A code segment or machine-executable instruction may represent a procedure, a function, a subprogram, a program, a routine, a subroutine, a module, a software package, a script, a class, or any combination of instructions, data structures, and/or program statements. A code segment may be coupled to another code segment or a hardware circuit by passing and/or receiving information, data, arguments, parameters, and/or memory contents. Information, arguments, parameters, data, etc. may be passed, forwarded, or transmitted via any suitable means including memory sharing, message passing, token passing, network transmission, etc.

For a firmware and/or software implementation, the methodologies may be implemented with modules (e.g., procedures, functions, and so on) that perform the functions described herein. Any non-transitory computer-readable medium tangibly embodying instructions may be used in implementing the methodologies described herein. For example, software codes may be stored in a memory. Memory may be implemented within the processor or external to the processor. As used herein, the term "memory" refers to any type of volatile, non-volatile, or other storage medium and is not to be limited to any particular type of memory, number of memories, or type of media upon which memory is stored.

Moreover, as disclosed herein, the term "storage" may represent one or more memories for storing data, including read only memory (ROM), random access memory (RAM), magnetic RAM, cache memory, magnetic disk storage mediums, optical storage mediums, flash memory devices, and/or other machine-readable mediums for storing information. The term "computer-readable medium" includes, but is not limited to, portable or fixed storage devices, optical storage devices, and/or various other storage mediums capable of storing that contain or carry instruction(s) and/or data.

The examples and embodiments described herein are for illustrative purposes only. Various modifications or changes in light thereof will be apparent to persons skilled in the art. These are to be included within the spirit and purview of this application, and the scope of the appended claims, which follow.

## Claims

1. A computer-implemented method of performing intrusion detection at a vehicle (106, 406), the computer-implemented method comprising:
capturing a set of inertial samples (132, 232) using an inertial sensor (312, 412) of an intrusion detection device (102, 302, 402);
capturing a set of pressure samples (134, 234) using a pressure sensor (318, 418) of the intrusion detection device;
identifying, by a processor (120, 320, 420) of the intrusion detection device, a first specific pattern in the set of inertial samples and a second specific pattern in the set of pressure samples, the first specific pattern being temporally aligned with the second specific pattern;
in response to identifying the first specific pattern and the second specific pattern, generating a notification of an intrusion event (140); and
transmitting the notification of the intrusion event to a remote device.

2. The computer-implemented method of claim 1, wherein the first specific pattern and the second specific pattern are identified using a machine learning model.

3. The computer-implemented method of claim 2, wherein the set of inertial samples and the set of pressure samples are provided as inputs to the machine learning model.

4. The computer-implemented method of claim 1, wherein the first specific pattern in the set of inertial samples includes a spike in the set of inertial samples.

5. The computer-implemented method of claim 1, wherein the second specific pattern in the set of inertial samples includes an increase by a first threshold amount or a decrease by a second threshold amount in the set of pressure samples.

6. The computer-implemented method of claim 1, wherein the intrusion detection device is mounted to a windshield of the vehicle.

7. The computer-implemented method of claim 1, wherein the notification of the intrusion event indicates that a door opening of the vehicle was detected.

8. The computer-implemented method of claim 1, wherein the notification of the intrusion event indicates that a window breaking of the vehicle was detected.

9. The computer-implemented method of claim 1, wherein the intrusion detection device is an Internet of things (IoT) device.

10. The computer-implemented method of claim 1, wherein the intrusion detection device is a smartphone.

11. The computer-implemented method of claim 1, wherein the intrusion detection device is integrated with the vehicle.

12. The computer-implemented method of claim 1, wherein the set of inertial samples and the set of pressure samples are captured while the vehicle is parked, turned off, and/or passengerless.
12. A non-transitory computer-readable medium comprising instructions that, when executed by one or more processors, cause the one or more processors to perform the method of any of claims 1 to 12.

13. A system comprising:
one or more processors; and
a computer-readable medium comprising instructions that, when executed by the one or more processors, cause the one or more processors to perform the method of any of claims 1 to 12.
